# EUROPEAN PATENT SPECIFICATION

(11) **EP 2 333 246 B1**
(45) Date of publication and mention of the grant of the patent: **31.08.2016**
(21) Application number: 09014910.5
(22) Date of filing: 01.12.2009
(51) Int. Cl.: F01D 11/24, F01D 25/10, F01D 25/14, F02C 6/00, F01K 7/22

(54) **Reheat turbine with blind wall**
Turbine mit Zwischenerhitzung mit Trennwand
Turbine à réchauffage avec paroi de séparation

(43) Date of publication of application: 15.06.2011
(73) Proprietor: Siemens Aktiengesellschaft, 80333 München (DE)
(72) Inventor: Wikström, Rolf, 61240 Finspäng (SE)

(56) References cited:
- EP-A2- 2 143 888
- JP-A- 2003 148 109
- JP-A- 2004 218 435
- JP-U- 4 008 703
- US-A- 2 547 300
- US-A- 2 920 867
- US-A- 4 651 532

## Description

### Field of invention

The present invention relates to the field of reheat turbines, and more particularly to a reheat turbine with blind wall separating a high pressure part from a low pressure part of a reheat turbine.

### Art Background

In the field of electrical power generation energy efficiency is a key requirement. Higher oil and gas prices and the awareness of greenhouse effect are contributing to an increasing demand for renewable energy in the portfolio of many utilities. One way to contribute to the sustainability of the environment and its energy resources is in the implementation of industrial steam turbine solutions for alternative energy applications. For waste-to-energy, solar power and biomass, a number of proven solutions already illustrate the capacity of steam turbine driven generators. Waste-to-energy is a process by which forestry and agricultural waste (biomass) and municipal solid waste (garbage) is incinerated at high temperatures producing high temperature gas, which then passes under high pressure through a gas turbine to generate electricity. Alternatively, the high temperature gas can also be used to produce steam, which is then used to generate electric power in a steam turbine. Because the cost of the fuel in waste-to-energy facilities is virtually non-existent, it represents a viable energy alternative to fossil fuels which are non-renewable and cost money. A typical boiler fired with fresh wood can generate gas or steam of high temperature, e.g. in the range of 480°C - 540°C. In order to use most of the energy so called reheat solutions are used. The reheat concept is based on live gas/steam running through a high pressure (HP) turbine. Before entering a low pressure (LP) turbine, the gas/steam is returned to a heat exchanger, e.g. a steam generator, to increase its temperature to the live gas/steam parameters while the pressure more or less remains as is.

One requirement of modern turbines is a compactness of the turbine design. Also typical for modern turbines is a so called barrel design. In order to achieve compactness using a barrel design, at least two modules (e.g. HP-LP, HP-IP or IP-LP) are combined in one common casing. In order to separate modules operating at different pressures (e.g., high pressure (HP), intermediate pressure (IP), or low pressure (LP)), a barrier or blind wall within a common casing separates the two modules. Typically, in such a design a split plane is used that is attached and supported by the casing.

JP 04008703 U discloses a turbine with a high pressure and a low pressure section. Fluid from the high pressure and from the low pressure section may be guided to an intermediate space which divides the high pressure section from the low pressure section. The fluid in the intermediate space may be exhausted to the environment of the turbine.

EP 2 143 888 A2 discloses a steam turbine and a method of cooling a steam turbine. A turbine comprises a high pressure turbine section and an intermediate pressure turbine section. Between both sections an inner casing is attached that comprises a through-hole for supplying heating air to a labyrinth sealing in the region of a turbine rotor.

US 2,547,300 discloses a diaphragm for reheat an elastic fluid turbine. On the lower pressure stage side of a diaphragm an annular shield plate is located inside a turbine. Through an inlet passage a reheated fluid from a reheater is injected in order to heat e.g. this annular shielding plate.

US 4,651,532 discloses a method of warming up a reheat turbine. Through a steam pipe with an inlet port heated fluid is blown in a steam chamber and thus heats the section of a casing between a high pressure steam turbine and an intermediate pressure steam turbine.

US 2,920,867 discloses a reheat turbine apparatus. A blind wall 56 separates a blade row from a blade row.

JP 2003148109 A discloses a deformation adjusting device for a steam turbine casing. A steam passage runs along an outer wall of a first casing section and communicates with a steam chest, so that the casing is heated by steam flowing through the steam passage.

JP 2004218435 A discloses a turbo charger, wherein a heater is mounted to an external wall surface of a passage wall of an annular passage.

However, there may be a need for providing an alternative blind wall for a reheat turbine allowing for a reliable and/or efficient operation of a reheat turbine.

### Summary of the Invention

This need may be met by a reheat turbine according to independent claim 1. Advantageous embodiments are described by the dependent claims.

According to an exemplary aspect a blind wall for a reheat turbine comprising a high pressure portion and a low pressure portion separated from each other by the blind wall is provided, wherein the blind wall is adapted to be heated.

In particular, the blind wall is adapted to be heated by an element which is different from the media or fluid which drives the high pressure turbine blades or the low pressure turbine blades.

According to an exemplary aspect a reheat turbine is provided which comprises a rotor shaft having a high pressure section and a low pressure section, a blind wall according to an exemplary aspect, a casing, a high pressure portion, and a low pressure portion, wherein the rotor shaft is arranged in the casing in such a way that the high pressure section is arranged in the high pressure portion and the low pressure section is arranged in the low pressure portion, and wherein the high pressure portion is separated from the low pressure portion by the blind wall.

In particular, the reheat turbine may be a steam turbine or a gas turbine, i.e. a working media or fluid may be gas, e.g. exhaust gas of a combustion chamber or steam generated by using such combustion gases. In particular, the reheat turbine may further comprise rotor blades fixed to the high pressure section and the low pressure section of the rotor shaft. Additionally, one or several rotor sealing(s) may be arranged or fixed on the blind wall at the end which is closest to the rotor shaft and/or may be fixed on the rotor shaft opposite to the blind wall. Such rotor sealing(s) may be suitable to reduce a direct flow of working fluid from the high pressure stage or portion to the low pressure stage or portion. In particular, the casing may be a single casing or common casing, i.e. the turbine may be a single casing high pressure-low pressure reheat turbine.

A reheat turbine system may provided which comprises a reheat turbine according to an exemplary aspect and a heat source coupled to the reheat turbine and adapted to provide a working fluid into the reheat turbine.

In particular, the heat source may be, besides embodiments of the invention, a combustion chamber providing exhaust gas, combustion gas or flue gas which is directly supplied to the reheat turbine. Alternatively, the heat source may be a heat exchanger or boiler which is used to generate steam by using a combustion gas.

It should be noted that the heating of the blind wall may also be used to heat sealings which are arranged on the blind wall or opposite to the end of the blind wall at the rotor shaft as well. Such sealings may be used to at least partially seal the high pressure part from the low pressure part. In particular, these sealings may be adapted or may function so that a direct flowing of the working media, gas/steam from the low pressure end of the high pressure stage to the low pressure stage without being guided via a reheat unit.

By enabling the heating or warming of the blind wall it may be possible to prevent high temperature gradients or uneven temperature distribution over or in the blind wall, in particular in the direction parallel to a rotor shaft, i.e. the axial direction. That is, the blind wall may be warmed to a constant or at least more or less constant temperature due to the heating. This in turn may reduce the size of needed sealing clearances between the blind wall and the rotor shaft, since mechanical or thermal stress or strain is reduced. Such a possible reducing of the size of the sealing clearances may also improve the efficiency of the turbine, since less working media or fluid may pass directly from the high pressure stage to the low pressure stage without being reheated. Furthermore, the probability of distortion of the rotor, i.e. the rotor shaft including the rotor blades, and/or the blind wall and/or the casing the reheat turbine is arranged in, may be reduced. Additionally, vibrations may be reduced by providing a more even temperature distribution over the blind wall and/or by reducing the size of the sealing clearances.

Next further embodiments of the reheat turbine with a blind wall will be described.

According to an exemplary embodiment of the invention the blind wall further comprises a heating element with an electrical heater.

According to an example not forming part of the invention the blind wall heating element comprises a duct extending through the blind wall.

For example, the duct may be adapted so that a hot fluid is guidable through the duct. The term "hot" may particularly denote a temperature which is higher than or increased to the temperature of the material surrounding the duct, i.e. parts of the blind wall, so that the temperature of the blind wall is increased compared to a temperature the duct would have in case no fluid is guided through the duct. For example, the hot fluid may be the same fluid as the working fluid which is bypassing the high pressure stage of the turbine. For example, the blind wall may be hollow or may be formed by two plates or sheets fixed to each other by separated by a distance which forms the duct through which a hot fluid may be guided. Of course also one or more tubelike or cylinderlike duct may be formed separately in the blind wall. The numbers of such ducts may be chosen according to the necessary heating of the blind wall and may also depend on the temperature of the heating fluid. According to the invention the heating element is formed by an electric heater, e.g. by conductive elements included in the blind wall. In particular, the heating element of the blind wall may be dimensioned based on the heating capacity needed to reduce the temperature gradient in the blind wall under a predetermined threshold. The predetermined threshold may be for example determined based on a maximum mechanical stress imposed to the blind wall.

Next further embodiments of the turbine will be described. However, these embodiments also apply to the blind wall and the reheat turbine system.

According to another example not forming part of the invention the blind wall is fixed to the casing, and the duct of the blind wall is connected to a duct in the casing.

For example, the duct in the casing is formed by a hole through the material of the casing wall. By providing such a connected hole or duct it may be possible to introduce or pass in a heating fluid into the blind wall.

According to the embodiment of the present invention, the blind wall and the casing are contacted to each other by respective contacts enabling to introduce an electric current into the electric heating element.

According to another exemplary embodiment of the reheat turbine the rotor shaft and the blind wall are arranged in the casing in such a way that a clearance is provided between the blind wall and the rotor shaft.

The aspects defined above and further aspects of the present invention are apparent from the examples of embodiment to be described hereinafter and are explained with reference to the examples of embodiment. The invention will be described in more detail hereinafter with reference to examples of embodiment, but to which the invention is not limited.

### Brief Description of the Drawings

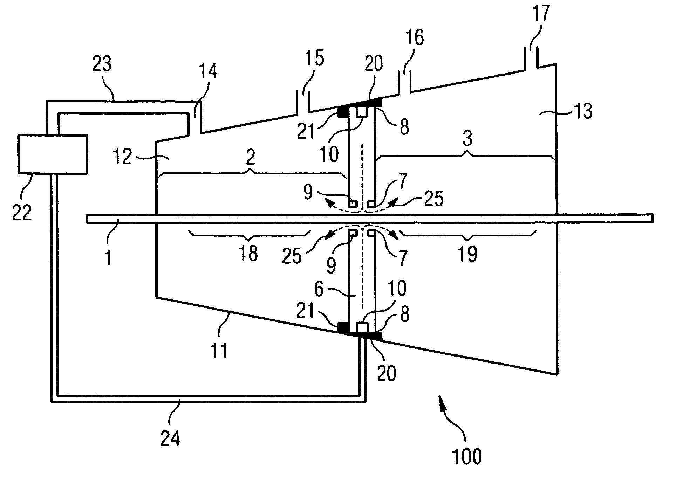

Fig. 1 shows an abstract model of a reheat steam turbine not forming part of the invention.

### Detailed Description

The illustration in the drawings is schematic.

Fig. 1 shows an abstract model of a reheat turbine 100, e.g. a reheat steam turbine or a reheat gas turbine not forming part of the invention. Centrally, a rotor shaft 1 is shown. A casing 11 of the reheat turbine is basically separated into a left and a right compartment or module. However, it may be build by a single part, e.g. may be integrally formed. The left compartment represents a high pressure chamber 12, and is building - together with all other components belonging to a high pressure chamber of a reheat turbine 100 - the high pressure module.

The right compartment represents a low pressure chamber 13, and may form - together with all other components belonging to a low pressure chamber of a steam turbine - the low pressure module.

The high pressure chamber 12 and the low pressure chamber 13 are separated by a blind wall 6. Part of the high pressure chamber 12 is a high pressure inlet 14 through which superheated live steam or gas at high temperature and high pressure from a, schematically depicted, heat source 22, e.g. a boiler/heat exchanger or combustion chamber, is led into the high pressure chamber 12.

As part of the high pressure portion 2 of the rotor assembly in a high pressure section 18 of the rotor shaft 1, there may be at least one high pressure rotor blade provided (not shown in Fig. 1).

Superheated live steam/gas is supplied via a supplying line 23 and via the high pressure inlet 14 to the high pressure chamber makes the high pressure rotor blades together with the rotor shaft 1 rotate. Thereby, the superheated live steam/gas is expanding and losing temperature. The somewhat cooled down and expanded steam/gas leaves the high pressure chamber 12 via high pressure outlet 15 or high pressure exhaust. From the high pressure exhaust the steam/gas is led back into a reheat unit for re-heating and raising the temperature of the relative low pressure steam/gas back to the original temperature. The reheated steam/gas is then admitted into the low pressure chamber 13 through a low pressure inlet 16.

As part of the low pressure portion 2 of the rotor assembly in a low pressure section 19 of the rotor shaft 1, there may be at least one low pressure rotor blade provided (not shown in Fig. 1).

The functioning of the transformation of thermal energy from the reheated steam/gas into rotational energy is performed equivalently to the transformation in the high pressure chamber 12. The cooled down and expanded steam/gas leaves the lower pressure chamber 12 through low pressure exhaust or low pressure outlet 17.

The high pressure chamber 12 and the low pressure chamber 13 are separated by a blind wall 6. The blind wall 6 extends radially inwards from the casing to the rotor shaft 1. The blind wall is thus facing the high pressure chamber 12 as well as the low pressure chamber 13, separating the two chambers or modules of the reheat turbine. The blind wall 6 has also a shaft end 7 facing the rotor shaft 1 as well as an outer end facing a projection 20 of the casing 11 in a barrel design. The projection 20 extends from the inner side of the casing 11 surrounding the complete circumference of the casing 11.

Between the shaft end 7 of the blind wall 6 and the rotor shaft 1, there may be a rotor sealing 9 provided in the form of a common sealing strip, in particular a plurality of common sealing strips (not shown in Fig 1). The sealing strips may be either arranged on the blind wall as schematically depicted in Fig. 1 or may be arranged on the rotor shaft.

On the other end 8 of the blind wall 6 there may be a casing sealing 10 provided. It may be provided in a groove of the blind wall. This casing sealing 10 may be a piston ring, particularly a plurality of piston rings (not shown in Fig. 1), surrounding the complete blind wall 6. The casing sealing 10 as well as the rotor sealing 9 are instrumental to separate - together with the blind wall - the high pressure chamber 12 from the low pressure chamber 13. Because the casing 11 builds a common casing for the high pressure chamber 12 and the low pressure chamber 13, the common wall 6 separates at the same time the high pressure module from the low pressure module.

Furthermore, a bypass line 24 is depicted which leads from the heat source 22 directly to the blind wall 6. However, it should be noted that the bypass line 24 does not necessarily begin at the heat source, it may as well begin anywhere between the heat source and the high pressure inlet of the reheat turbine. For example, the heating steam/gas for the blind wall may be drawn off at a sealing formed around the supply line, e.g. at the point the supply line enters the reheat turbine. By introducing hot steam/gas directly into a duct of the blind wall the blind wall may be warmed up or heated, so that a more even temperature distribution over the blind wall may be achieved. It should be noted that the bypass line not necessarily begins at a heat source external to the turbine but may alternatively start internal to the turbine, e.g. at the high temperature end of the high pressure stage. The blind wall 6 may further comprise an exit which is arranged close to the rotor sealing 9 enabling the exiting of the heating steam/gas into the high pressure chamber 12 and/or low pressure chamber 13, which is indicated in Fig. 1 by the arrows 25. Further, it should be mentioned that additional sealings may be provided at suitable places to support an efficient operation of the whole turbine, such sealings may be provided around the rotor shaft where the rotor shaft enters or leaves the casing of the turbine.

In case the reheat turbine comprises more than two modules, i.e., three modules, the low pressure chamber / module may indeed be an intermediate-pressure chamber. In this case, an additional low pressure chamber may be coupled to the reheat turbine in a known manner. Additionally, there may be provided a gearbox for adjusting the rotational speed of the reheat turbine to a required rotational speed of a generator shaft of an electrical generator.

Additionally to the projection 20 of the casing 11, there may be a stopper 21 provided to which the common wall 6 may be attached.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A reheat turbine (100) comprising,
a high pressure portion (2) and a low pressure portion (3),
a blind wall (6), and
a casing (11),
wherein the blind wall (6) separates the high pressure portion (2) and the low pressure portion (3) from each other, and
**characterized in that**
the blind wall (6) comprises a heating element with an electrical heater, wherein the heating element heats the blind wall (6),
wherein the blind wall (6) and the casing (11) are contacted to each other by respective contacts enabling to introduce an electric current into the electric heating element.

2. The reheat turbine (100) according to claim 1, further comprising:
a rotor shaft (1) having a high pressure section (12) and a low pressure section (13),
wherein the rotor shaft (1) is arranged in the casing (11) in such a way that the high pressure section (12) is arranged in the high pressure portion (2) and the low pressure section (13) is arranged in the low pressure portion (3).

3. The reheat turbine (100) according to claim 2,
wherein the rotor shaft (1) and the blind wall (6) are arranged in the casing (11) with a clearance between the blind wall (6) and the rotor shaft (1).

## Patentansprüche

1. Turbine (100) mit Zwischenüberhitzung, die Folgendes umfasst:
einen Hochdruckabschnitt (2) und einen Niederdruckabschnitt (3),
eine Trennwand (6) und
ein Gehäuse (11),
wobei die Trennwand (6) den Hochdruckabschnitt (2) und den Niederdruckabschnitt (3) voneinander abtrennt, und **dadurch gekennzeichnet, dass**
die Trennwand (6) ein Heizelement mit einer elektrischen Heizvorrichtung umfasst, wobei das Heizelement die Trennwand (6) erhitzt,
wobei die Trennwand (6) und das Gehäuse (11) über jeweilige Kontakte miteinander verbunden sind, die es ermöglichen, einen elektrischen Strom in das elektrische Heizelement zu leiten.

2. Turbine (100) mit Zwischenüberhitzung nach Anspruch 1, die ferner Folgendes umfasst:
eine Rotorwelle (1) mit einem Hochdruckteil (12) und einem Niederdruckteil (13),
wobei die Rotorwelle (1) so in dem Gehäuse (11) angeordnet ist, dass der Hochdruckteil (12) in dem Hochdruckabschnitt (2) und der Niederdruckteil (13) in dem Niederdruckabschnitt (3) angeordnet ist.

3. Turbine (100) mit Zwischenüberhitzung nach Anspruch 2,
bei der die Rotorwelle (1) und die Trennwand (6) mit einem Abstand zwischen der Trennwand (6) und der Rotorwelle (1) in dem Gehäuse (11) angeordnet sind.

## Revendications

1. Turbine de réchauffage (100) comprenant
une partie (2) haute pression et une partie (3) basse pression,
une paroi aveugle (6), et
un carter (11),
dans laquelle la paroi aveugle (6) sépare la partie (2) haute pression et la partie (3) basse pression l'une de l'autre, et
**caractérisée en ce que**
la paroi aveugle (6) comprend un élément chauffant avec un système de chauffage électrique, dans laquelle l'élément chauffant chauffe la paroi aveugle (6),
dans laquelle la paroi aveugle (6) et le carter (11) sont mis en contact l'un avec l'autre par des contacts respectifs permettant d'introduire un courant électrique dans l'élément chauffant électrique.

2. Turbine de réchauffage (100) selon la revendication 1, comprenant en outre :
un arbre (1) de rotor ayant une section (12) haute pression et une section (13) basse pression,
dans laquelle l'arbre (1) de rotor est agencé dans le carter (11) de telle manière que la section (12) haute pression est agencée dans la partie (2) haute pression et la section (13) basse pression est agencée dans la partie (3) basse pression.

3. Turbine de réchauffage (100) selon la revendication 2,
dans laquelle l'arbre (1) de rotor et la paroi aveugle (6) sont agencés dans le carter (11) avec un espace entre la paroi aveugle (6) et l'arbre (1) de rotor.
